Europäisches Patentamt

European Patent Office

Office européen des brevets

(19)

(11) Numéro de publication : **0 290 335 B1**

# (12) FASCICULE DE BREVET EUROPEEN

(45) Date de publication du fascicule du brevet :
25.03.92 Bulletin 92/13

(51) Int. Cl.⁵ : **H02G 11/02**

(21) Numéro de dépôt : **88401073.7**

(22) Date de dépôt : **03.05.88**

(54) **Enrouleur, en particulier pour câble électrique.**

(30) Priorité : **04.05.87 FR 8706244**

(43) Date de publication de la demande :
**09.11.88 Bulletin 88/45**

(45) Mention de la délivrance du brevet :
**25.03.92 Bulletin 92/13**

(84) Etats contractants désignés :
**BE DE ES GB GR IT NL**

(56) Documents cités :
**FR-A- 2 384 700**
**US-A- 2 856 470**
**US-A- 4 272 036**

(73) Titulaire : **LEGRAND**
**128 Avenue du Maréchal de Lattre de Tassigny**
**F-87045 Limoges Cédex (FR)**

(72) Inventeur : **Jarry, Patrice**
**Mont Saint Jean**
**F-72590 St Georges le Gaultier (FR)**
Inventeur : **Marcou, Jean-Claude**
**Pass & Seymour P.O. B. 4822**
**Syracuse, N.Y. 13221 (US)**

(74) Mandataire : **CABINET BONNET-THIRION**
**95 Boulevard Beaumarchais**
**F-75003 Paris (FR)**

## Description

La présente invention concerne d'une manière générale les enrouleurs, et elle vise plus particulièrement, mais non nécessairement exclusivement, ceux de ces enrouleurs qui, destinés au logement d'un quelconque câble, et par exemple d'un câble électrique, d'un câble téléphonique, ou d'un câble de télévision, sont à usage domestique ou ménager.

Plus précisément encore, elle vise les enrouleurs du genre comportant un corps, qui forme un logement pour le câble concerné, et qui, latéralement, présente une ouverture pour la sortie de celui-ci, un flasque, qui, monté rotatif sur le corps en fermant le logement que forme celui-ci, constitue un tambour d'enroulement pour ce câble, et une embase de branchement, qui est solidaire du flasque, et qui porte elle-même au moins un organe de branchement propre à l'établissement d'une connexion avec le câble.

Par exemple, s'agissant d'un enrouleur pour câble électrique, cet organe de branchement est en pratique un socle de prise de courant qui est propre à l'engagement d'une fiche de prise de courant complémentaire et auquel est raccordé le câble électrique concerné.

Pour la commande en rotation du flasque nécessaire à l'enroulement du câble, il peut suffire d'agir directement sur ce flasque.

Le plus souvent, cependant, pour faciliter cette commande, il est usuel de doter le flasque d'un ergot faisant perpendiculairement saillie à sa surface à proximité de sa périphérie.

Outre que, ses dimensions étant nécessairement réduites, la préhension de cet ergot n'est pas toujours très aisée, le bras de manivelle qui le sépare de l'axe du flasque est nécessairement inférieur au diamètre de celui-ci, et il peut s'avérer insuffisant pour que le couple à vaincre soit commodément surmonté.

Pour pallier cette difficulté, on peut songer à doter le flasque d'une manivelle de commande ayant une extension supérieure à celle de son propre diamètre.

Mais une telle disposition ne peut que renchérir l'ensemble, et, si elle est adoptée systématiquement, il est à craindre qu'elle nuise à une diffusion maximale de l'enrouleur correspondant.

En outre, la manivelle de commande ainsi appliquée au flasque de cet enrouleur ne peut normalement qu'augmenter l'encombrement diamétral de celui-ci, et en rendre de ce fait moins ainsi le rangement en dehors de ses périodes d'utilisation.

La présente invention a d'une manière générale pour objet une disposition permettant d'éviter ces inconvénients et conduisant en outre à d'autres avantages.

De manière plus précise, elle a pour objet un enrouleur du genre concerné caractérisé en ce que son flasque rotatif présente, en attente, des moyens de fixation qui sont propres à permettre d'y assujettir à la demande une manivelle de commande et qui sont constitués de deux barrettes, qui, allongées parallèlement l'une à l'autre, s'étendent chacune respectivement de part et d'autre de l'organe de branchement et forment conjointement une glissière.

Ainsi, suivant les destinations et les marchés correspondants, il est avantageusement possible, à partir d'une même fabrication économiquement propre à une standardisation de l'ensemble, de commercialiser, à la demande, un tel enrouleur, sous l'une ou l'autre de deux formes de commercialisation distinctes, l'une, plus confortable, mais évidemment plus chère, équipée par avance d'une manivelle de commande, l'autre, moins coûteuse, dépourvue d'une telle manivelle de commande.

En outre, lorsque le flasque de cet enrouleur est effectivement équipé d'une manivelle de commande, celle-ci y est avantageusement montée mobile entre deux positions, à savoir une position rétractée d'attente, et une position déployée de service.

En position rétractée d'attente, la manivelle de commande s'étend en pratique tout entière dans l'encombrement diamétral hors tout de l'ensemble, et elle n'augmente donc en rien cet encombrement diamétral, au bénéfice des facilités de rangement.

Par contre, en position déployée de service, la manivelle de commande s'étend largement au-delà du diamètre du flasque, et elle facilite la manoeuvre de celui-ci, au bénéfice du confort de l'opérateur.

Mais, corollairement, et suivant un développement de l'invention, la manivelle de commande, en position rétractée d'attente, occulte l'accès à l'organe de branchement, tout en libérant cet accès en position de service.

Ainsi, lorsque l'enrouleur n'est pas en service, il est normalement empêché d'avoir accès à son organe de branchement, ce qui est avantageusement favorable à la sécurité si, par ailleurs, le câble auquel il sert de logement se trouve branché.

Par ailleurs, et suivant un autre aspect de l'invention relevant du même but de standardisation pour deux formes de commercialisation distinctes possibles, le corps de l'enrouleur suivant l'invention présente, en attente, des moyens de fixation propres à permettre d'y assujettir à la demande une poignée de préhension, ces moyens de fixation comportant, disposées diamétralement en positions opposées l'une par rapport à l'autre, deux paires de barrettes, qui s'étendent transversalement sur la tranche de ce corps, et qui sont chacune adaptées à permettre d'y ajuster l'extrémité d'une lanière formant poignée de préhension.

Cette poignée de préhension, qui est en pratique constituée par une simple lanière, est également de nature à améliorer le confort de l'usager, sans cependant être impérative.

Les caractéristiques et avantages de l'invention ressortiront d'ailleurs de la description qui va suivre, à titre d'exemple, en référence aux dessins schématiques annexés sur lesquels :

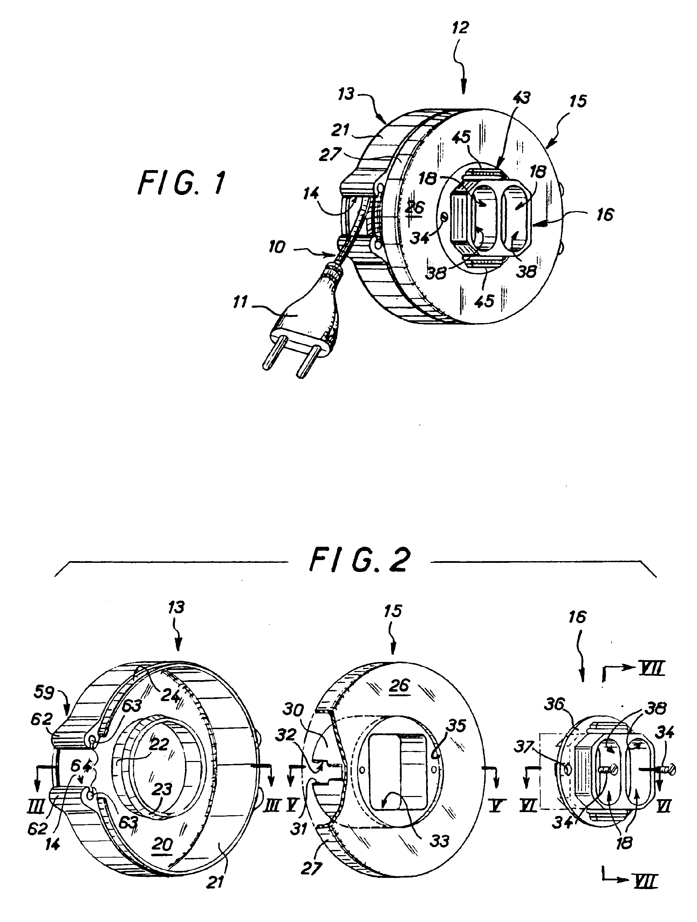

la figure 1 est une vue en perspective d'un enrouleur suivant l'invention, suivant une forme de commercialisation simplifiée de celui-ci ;

la figure 2 est, avec un arrachement local, une vue en perspective éclatée de cet enrouleur ;

la figure 3 est une vue en coupe axiale de son corps, suivant la ligne III-III de la figure 2 ;

la figure 4 est une vue partielle en coupe transversale de ce corps, suivant la ligne IV-IV de la figure 3 ;

la figure 5 est une vue en coupe axiale du flasque associé à ce corps, suivant la ligne V-V de la figure 2 ;

la figure 6 est une vue en coupe axiale de l'embase de branchement portée par ce flasque, suivant la ligne VI-VI de la figure 2 ;

la figure 7 est une autre vue en coupe axiale de cette embase de branchement, suivant la ligne VII-VII de la figure 2 ;

la figure 8 est une vue en perspective analogue à celle de la figure 1, pour une forme de commercialisation plus complète de l'enrouleur suivant l'invention, vu de l'avant ;

la figure 9 est une vue en perspective, vu de l'arrière, de cette deuxième forme de commercialisation de l'enrouleur suivant l'invention ;

la figure 10 est une vue partielle en coupe axiale de l'embase de branchement que comporte cette deuxième forme de réalisation et de la manivelle de commande dont elle est alors équipée, suivant la ligne X-X de la figure 8;

la figure 11 est une autre vue partielle en coupe axiale de cette embase de branchement et de cette manivelle de commande, suivant la ligne XI-XI de la figure 8 ;

la figure 12 reprend, à échelle supérieure, le détail de la figure 8 repéré par un encart XII sur cette figure 8 ;

la figure 13 est, à la manière de la figure 12, une vue partielle en perspective de la poignée de préhension dont est alors également équipé l'enrouleur suivant l'invention.

Ces figures illustrent à titre d'exemple l'application de l'invention au logement d'un câble électrique 10.

Comme il est de règle, celui-ci est équipé, à son extrémité, d'une fiche de prise de courant 11.

De manière connue en soi, et suivant des modalités décrites plus en détail ultérieurement, l'enrouleur 12 mis en oeuvre pour le logement de ce câble électrique 10 comporte, globalement, un corps 13, qui est propre à former un tel logement, et qui, latéralement, présente une ouverture 14 pour la sortie du câble électrique 10, un flasque 15, qui, monté rotatif sur le corps 13 en fermant le logement que forme celui-ci, constitue un tambour d'enroulement pour le câble électrique 10, et une embase de branchement 16, qui est solidaire du flasque 15, et qui porte au moins un organe de branchement 18 propre à l'établissement d'une connexion avec ce câble électrique 10.

En pratique, dans le forme de réalisation représentée, deux organes de branchement 18 sont prévus, parallèlement l'un à l'autre, et il s'agit de socles de prise de courant, qui, branchés en parallèle à l'extrémité interne du câble électrique 10, sont chacun propres à l'engagement d'un fiche de prise de courant complémentaire.

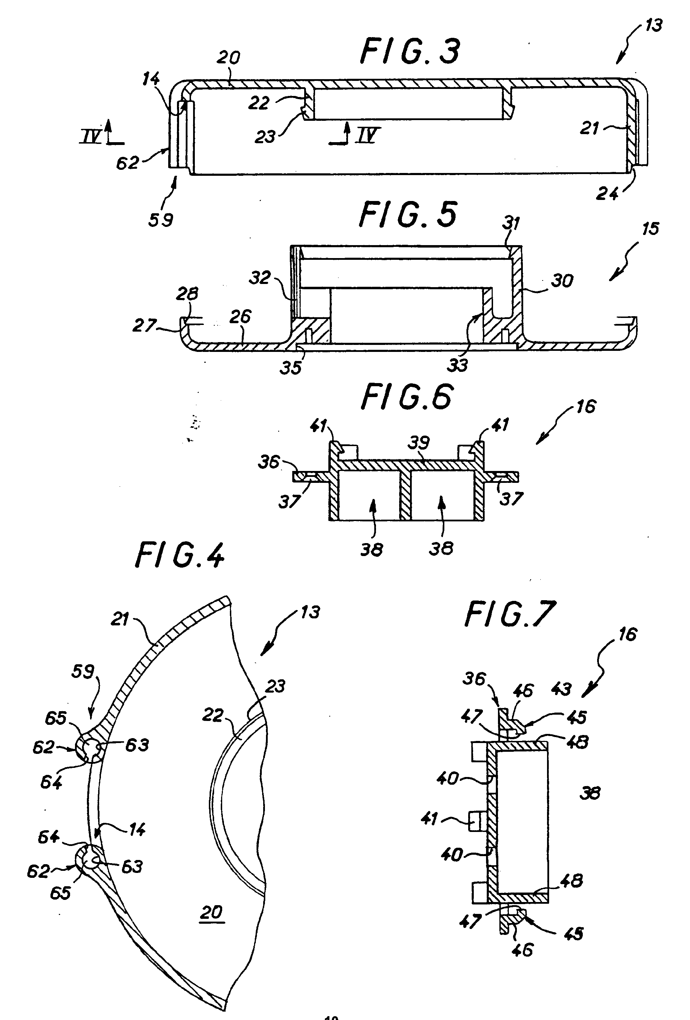

Dans la forme de réalisation représentée, le corps 13 se présente sous la forme générale d'une cuvette, et il comporte donc une paroi de fond 20, et, se raccordant à celle-ci par un congé arrondi, une paroi latérale cylindrique 21, figure 3.

Sur la surface interne de la paroi de fond 20 s'étend axialement en saillie, coaxialement par rapport à la paroi latérale cylindrique 21, mais sur une hauteur moindre que celle de celle-ci, une collerette annulaire 22, qui, le long de son bord libre, présente, radialement en saillie sur sa surface externe, un bourrelet d'encliquetage 23.

Le long de son bord libre, la paroi latérale cylindrique 21 présente, en décrochement sur sa surface extérieure, un embrèvement 24 formant feuillure.

Exception faite du congé arrondi qui la raccorde à la paroi de fond 20, cette paroi latérale cylindrique 21 est affectée par l'ouverture 14 sur toute sa hauteur, et cette ouverture 14 se trouve délimitée latéralement par deux de ses génératrices.

Le flasque 15, qui est globalement annulaire, au diamètre du corps 13, présente une paroi de façade 26, et, axialement en saillie sur la surface interne de cette paroi de façade 26, à la périphérie de celle-ci, en se raccordant à cette paroi de façade 26 par un congé arrondi, un rebord 27, figure 5.

Le long de son bord, ce rebord 27 est affecté, en creux sur sa surface interne, d'un embrèvement 28, qui, complémentaire de l'embrèvement 24 de la paroi latérale cylindrique 21 du corps 13, forme, comme celui-ci, une feuillure.

Le flasque 15 présente, également, axialement en saillie sur la surface interne de sa paroi de façade 26, coaxialement par rapport à son rebord 27, mais sur une hauteur supérieure à celle de celui-ci, une collerette 30, dont le diamètre est supérieur à celui de la collerette 22 du corps 13, de manière à pouvoir s'engager sur celle-ci, et qui présente, le long de son bord libre, radialement en saillie sur sa surface interne, un bourrelet d'encliquetage 31 complémentaire du bourrelet d'encliquetage 23 de cette collerette 22.

Les dispositions sont telles que, lorsque le flasque 15 est rapporté sur le corps 13, avec venue en prise de manière élastiquement déformable, par encliquetage de leurs bourrelets 31 et 23 respectifs, des collerettes 30 et 22 correspondantes, le rebord 27 de ce flasque 15 se dispose sensiblement en continuité avec la paroi latérale cylindrique 21 du corps 13, avec emboîtement des embrèvements formant feuillures 28 et 24 correspondants.

Ainsi qu'il est aisé de le comprendre, le logement que forme alors pour le câble électrique 10 le corps 13 s'étend annulairement autour des collerettes 22 et 30, entre celles-ci et la paroi latérale cylindrique 21 et le rebord 27.

La collerette 30 du flasque 15 présente, localement, une ouverture 32 pour le passage du câble électrique 10, et, intérieurement, elle définit un logement 33, qui, dans la forme de réalisation représentée, a un contour globalement quadrangulaire, et qui est propre à recevoir le mécanisme nécessaire à la desserte des organes de branchement 18.

C'est à ce mécanisme, non représenté sur les figures, qu'est raccordé, à son extrémité interne, le câble électrique 10.

Dans la forme de réalisation représentée, l'embase de branchement 16 forme une pièce qui, distincte du flasque 15, est convenablement rapportée sur celui-ci, à l'aide, en pratique, de vis 34.

Cette embase de branchement 16 comporte, en pratique, dans la forme de réalisation représentée, une platine 36, qui, de contour circulaire, trouve son logement dans un dégagement de même contour 35 de la paroi de façade 26 du flasque 15, et qui est percée de deux trous 37 pour le passage des vis 34, avec, en saillie sur la surface extérieure de cette platine 36, en étant disposés côte à côte, deux puits 38 correspondants chacun respectivement aux deux organes de branchement 18.

Ces puits 38, qui, dans la forme de réalisation représentée, ont un contour allongé en navette, sont chacun respectivement fermés par un fond 39 commun, avec, traversant celui-ci, deux trous 40 propres au passage des broches d'une fiche de prise de courant.

Sur la surface du fond 39 opposée aux puits 38 font saillie, dans la forme de réalisation représentée, des crochets 41 propres à l'encliquetage du mécanisme correspondant.

Ces dispositions sont bien connues par elles-mêmes, et ne faisant pas en propre l'objet de la présente invention, elles ne seront pas décrites plus en détail ici.

Suivant l'invention, le flasque 15 présente, en attente, des moyens de fixation 43 propres à permettre d'y assujettir à la demande une manivelle de commande 44.

Dans la forme de réalisation représentée, ces moyens de fixation 43 sont constitués de deux barrettes 45, qui, allongées parallèlement l'une à l'autre, forment conjointement une glissière, en ayant chacune transversalement pour ce faire un profil en équerre.

Dans la forme de réalisation représentée, ces barrettes 45 sont portées par l'embase de branchement 16, et elles s'étendent chacune respectivement de part et d'autre des organes de branchement 18, et étant allongées sensiblement perpendiculairement à la direction d'allongement des puits 38 donnant accès à ceux-ci.

Chacune de ces barrettes 45 est constituée d'une languette 46, par laquelle elles se raccordent d'un seul tenant à la platine 36 de l'embase de branchement 16, et, en direction l'une de l'autre, et donc en direction des puits 38 des organes de branchement 18, à distance de cette platine 36, d'un retour en équerre 47.

En pratique, la surface externe des parois 48 des puits 38 des organes de branchement 18 vers lesquelles sont chacun respectivement tournés les retours en équerre 47 des barrettes 45 est plate, parallèlement aux languettes 46 correspondantes, et, entre ces parois 48 et ces retours en équerre 47, subsiste un intervalle, figure 7.

La manivelle de commande 44 est destinée à équiper, ou non, à la demande, l'enrouleur 12.

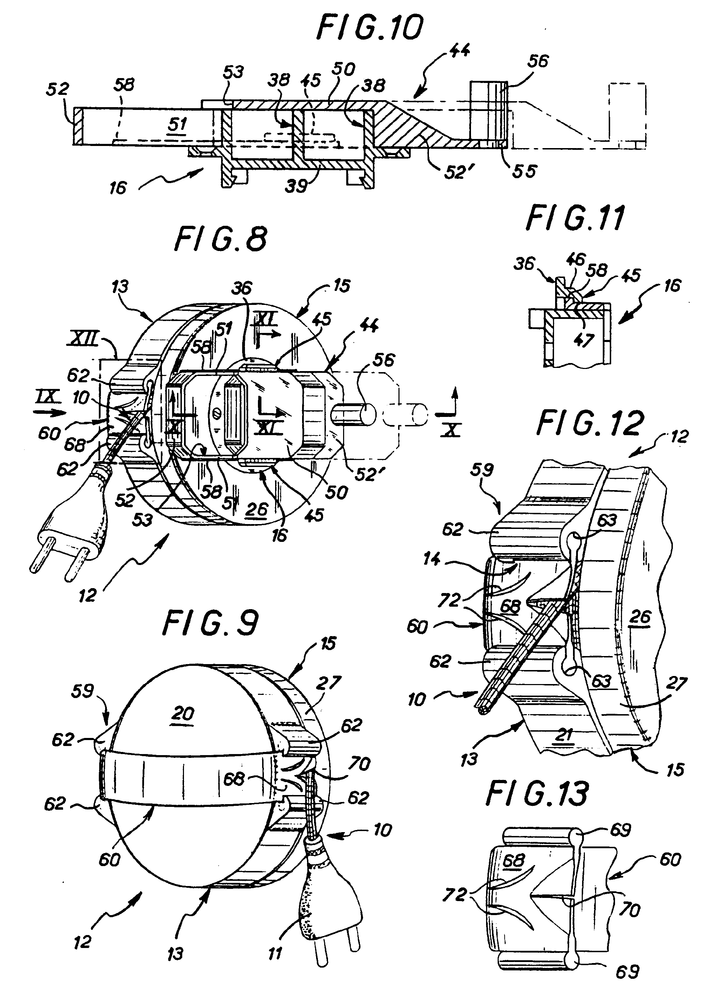

Dans la forme de réalisation représentée, elle forme un capot, qui, de contour globalement rectangulaire, avec chacun des angles de ce contour abattu par un chanfrein, comporte une paroi de façade 50, et, globalement perpendiculairement à celle-ci, deux parois latérales longitudinales 51, et deux parois latérales transversales 52, 52', figures 8 et 10.

Pour des raisons qui apparaîtront ci-après, la paroi de façade 50 est largement ajourée d'un évidement 53, qui cotoie l'une des parois latérales transversales, en l'espèce la paroi latérale transversale 52, et qui cotoie, également, sur une portion de leur longueur, les parois latérales longitudinales 51.

Du fait de cet évidement 53, la paroi latérale transversale 52 se réduit à une simple barrette.

Par contre, la paroi latérale transversale 52' opposée est largement épaissie, pour en renforcer la rigidité, et, à niveau avec son bord, qui est lui-même à niveau avec celui de la paroi latérale transversale 52 et celui des parois latérales longitudinales 51, elle se prolonge par une languette 55 sur laquelle fait perpendiculairement saillie un ergot de préhension 56.

Sur leur surface externe, les parois latérales longitudinales 51 portent chacune respectivement, en saillie, sur une partie de leur longueur, le long de leur bord libre, une nervure 58.

La manivelle de commande 44 ainsi constituée coiffe les organes de branchement 18, et, plus précisément, dans la forme de réalisation représentée, les puits 38 entourant ceux-ci, et, par ses parois latérales longitudinales 51 opposées, elle est en prise avec les barrettes formant glissière 45, ces parois latérales longitudinales 51 étant insérées entre les parois 48 correspondantes des puits 38 et les barrettes 45 à la faveur de l'intervalle ménagé entre ces paroi 48 et les retours 47 de ces barrettes 45, avec leurs nervures 58 crochetées sous ces derniers.

Conjointement, la manivelle de commande 44 se trouve alors mobile entre deux positions, à savoir une position rétractée d'attente, représentée en trait plein sur les figures 8 et 10, pour laquelle, allongée sensiblement diamètralement, en étant en butée par sa paroi latérale transversale 52′ contre le puits 38 correspondant de l'embase de branchement 16, elle est tout entière comprise dans l'encombrement diamétral hors tout de l'enrouleur 12 qu'elle équipe, et une positon déployée de service, représentée en traits interrompus sur les figures 8 et 10, pour laquelle, en butée par sa paroi latérale transversale 52 contre le puits 38 opposé de cette embase de branchement 16, elle fait au contraire largement saillie, radialement, au-delà du contour de cet enrouleur 12.

Pour la position rétractée d'attente, la paroi de façade 50 de la manivelle de commande 44 recouvre les puits 38 de l'embase de branchement 16, et cette manivelle de commande 44 occulte donc alors l'accès aux organes de branchement 18 correspondants.

Pour la position déployée de service, elle libère au contraire cet accès, l'évidement 53 de sa paroi de façade 50 se trouvant alors au droit des puits 38 concernés.

Ainsi qu'il est aisé de le comprendre, la mise en place de la manivelle de commande 44 se fait par simple encliquetage, par déformation élastique de ses parois latérales longitudinales 51 au droit de l'évidement 53 de sa paroi de façade 50, cet évidement 53 facilitant avantageusement cette déformation élastique.

Ainsi qu'il est également aisé de le comprendre, la manivelle de commande 44 ainsi prévue suivant l'invention, facilite grandement, et rend plus confortable, la manoeuvre du flasque 15 nécessaire à un enroulement du câble électrique 10.

Mais, en son absence, cette manoeuvre reste évidemment possible, en agissant directement sur le flasque 15 ; les puits 38 peuvent par exemple faciliter cette manipulation.

Par ailleurs, et suivant un autre aspect de l'invention, le corps 13 de l'enrouleur 12 suivant l'invention présente, de préférence, et tel que représenté, en attente, des moyens de fixation 59 propres à permettre d'y assujettir à la demande une poignée de préhension 60.

Dans la forme de réalisation représentée, ces moyens de fixation 59 comportent, disposées diamétralement en positions opposées l'une par rapport à l'autre, deux paires de barrettes 62, qui s'étendent transversalement sur la tranche du corps 13, c'est-à-dire sur la paroi latérale cylindrique 21 de celui-ci, en y faisant saillie suivant chacune respectivement une génératrice, et qui sont chacune adaptées à permettre d'y ajuster l'extrémité d'une lanière formant la poignée de préhension 60.

En pratique, chacune des ces barrettes 62 comporte, longitudinalement, un évidement 63, qui, par une fente 64, débouche latéralement à l'extérieur en direction de la barrette 62 de la même paire, et qui, à l'une de ses extrémités, est fermé par une paroi transversale 65.

En pratique, également, les deux barrettes 62 d'une même paire sont chacune respectivement disposées de part et d'autre de l'ouverture 14 que présente, sur sa paroi latérale cylindrique 21, pour le passage du câble électrique 10, le corps 13.

Conjointement, pour être en prise avec de telles barrettes 62, la lanière formant la poignée de préhension 60 présente, à chacune de ses extrémités, une patte 68, munie latéralement, sur chacun de ses côtés, d'un bourrelet 69 complémentaire de l'évidement 63 d'une telle barrette 62.

En outre, celle des pattes 68 de cette lanière qui se trouve du côté de l'ouverture 14 du corps 13, et qui donc occulte cette ouverture 14, présente, dans sa zone médiane, sur une partie de sa hauteur à compter de son bord libre, pour le passage du câble électrique 10, une fente 70.

De préférence, les portions de cette patte bordant cette fente 70 sont d'épaisseur moindre, pour en faciliter l'effacement sous la sollicitation du câble électrique 10.

Conjointement, les pattes 68 de la lanière formant la poignée de préhension 60 sont de préférence renforcées par des nervures 72.

Comme la manivelle de commande 44, la poignée de préhension 60 ainsi constituée est destinée à équiper, ou non, à la demande, l'enrouleur 12.

Au lieu de former une pièce distincte du flasque 15, l'embase de branchement 16 pourrait tout aussi bien être d'un seul tenant avec ce flasque 15.

Mais, lorsqu'elle forme une pièce distincte, il est avantageusement possible, suivant le marché concerné, de substituer à une telle embase de branchement une embase de branchement dont les puits ont une configuration différente, spécifiquement adaptée à ce marché.

Corollairement, le domaine d'application de l'invention n'est pas limité à celui des seuls câbles électriques, mais s'étend au contraire tout aussi bien à celui d'autres types de câble, et par exemple aux câbles téléphoniques et aux câbles de télévision.

**Revendications**

1. Enrouleur, en particulier pour câble électrique, du genre comportant un corps (13), qui forme un logement pour le câble (10) concerné, et qui, latéralement, présente une ouverture (14) pour la sortie de celui-ci, un flasque (15), qui, monté rotatif sur le corps (13) en fermant le logement que forme celui-ci, constitue un tambour d'enroulement pour le câble (10), et une embase de branchement (16), qui est solidaire du flasque (15), et qui porte au moins un organe de branchement (18) propre à l'établissement d'une connexion avec le câble (10), caractérisé en ce que le flasque (15) présente en attente des moyens de fixation (43) qui sont propres à permettre d'y assujettir à la demande une manivelle de commande (44) et qui sont constitués de deux barrettes (45), qui, allongées parallèlement l'une à l'autre, s'étendent chacune respectivement de part et d'autre de l'organe de branchement (18) et forment conjointement une glissière.

2. Enrouleur suivant la revendication 1, caractérisé en ce que lesdites barrettes (45) ont chacune transversalement un profil en équerre.

3. Enrouleur suivant l'une quelconque des revendications 1, 2 caractérisé en ce que lesdites barrettes (45) sont portées par l'embase de branchement (16).

4. Enrouleur suivant l'une quelconque des revendications 1 à 3, caractérisé en ce que, le flasque (15) portant une manivelle de commande (44), celle-ci y est montée mobile entre deux positions, à savoir une position rétractée d'attente et une position déployée de service.

5. Enrouleur suivant la revendication 4, caractérisé en ce que, en position rétractée d'attente, la manivelle de commande (44) occulte l'accès à l'organe de branchement (18), et, en position de service, elle libère cet accès.

6. Enrouleur suivant les revendications 1 et 5, prises conjointement, caractérisé en ce que la manivelle de commande (44) forme un capot, qui, en prise par deux parois latérales (51) opposées avec les barrettes (45) formant glissière, coiffe l'organe de branchement (18), et dont la paroi de façade (50) est ajourée.

7. Enrouleur suivant l'une quelconque des revendications 1 à 6, caractérisé en ce que l'embase de branchement (16) forme une pièce qui, distincte du flasque (15), est rapportée sur celui-ci.

8. Enrouleur suivant l'une quelconque des revendications 1 à 6, caractérisé en ce que l'embase de branchement (16) est d'un seul tenant avec le flasque (15).

9. Enrouleur suivant l'une quelconque des revendications 1 à 8, caractérisé en ce que le corps (13) présente, en attente, des moyens de fixation (59) propres à permettre d'y assujettir à la demande une poignée de préhension (60), lesdits moyens de fixation (59) comportant, disposées diamétralement en positions opposées l'une par rapport à l'autre, deux paires de barrettes (62), qui s'étendent transversalement sur la tranche dudit corps (13), et qui sont chacune adaptées à permettre d'y ajuster l'extrémité d'une lanière formant poignée de préhension (60).

10. Enrouleur suivant la revendication 9, caractérisé en ce que chacune desdites barrettes (62) comporte, longitudinalement, un évidement (63), qui, par une fente (64), débouche latéralement à l'extérieur en direction de la barrette (62) de la même paire, et qui, à l'une de ses extrémités, est fermé par une paroi transversale (65).

11. Enrouleur suivant l'une quelconque des revendications 9, 10, caractérisé en ce que les deux barrettes (62) d'une même paire sont chacune respectivement disposées de part et d'autre de l'ouverture (14) que présente le corps (13) pour le passage du câble (10).

12. Enrouleur suivant la revendication 10, caractérisé en ce que, pour être en prise avec lesdites barrettes (62), la lanière formant poignée de préhension (60) présente, à chacune de ses extrémités, une patte (68) munie latéralement d'un bourrelet (69) sur chacun de ses côtés.

13. Enrouleur suivant les revendications 11 et 12, prises conjointement, caractérisé en ce que la patte (68) de la lanière formant poignée de préhension (60) qui se trouve du côté de l'ouverture (14) du corps (13) présente une fente (70).

**Patentansprüche**

1. Aufwickelvorrichtung, insbesondere für elektrische Kabel, mit einem Körper (13), der eine Aufnahme für das betreffende Kabel (10) bildet und seitlich eine Öffnung (14) für den Austritt desselben aufweist, einem Flansch (15), der drehbar an dem Körper (13) angebracht ist, die durch diesen gebildete Aufnahme abschließt und eine Aufwickeltrommel für das Kabel (10) bildet, und einem Anschlußstück (16), das fest mit dem Flansch (15) verbunden ist und zumindest ein Anschlußorgan (18) zur Herstellung einer Verbindung mit dem Kabel (10) trägt, dadurch **gekennzeichnet**, daß der Flansch (15) bereitstehende Befestigungsmittel (43) aufweist, an denen gewünschtenfalls eine Handkurbel (44) befestigbar ist und die durch zwei Steg- oder Stabelemente (45) gebildet sind, die parallel zueinander verlaufen, sich beiderseits des Anschlußorgans (18) erstrecken und zusammen eine Gleitführung bilden.

2. Aufwickelvorrichtung nach Anspruch 1, dadurch **gekennzeichnet**, daß die Stabelemente (45) in Querrichtung jeweils ein Winkelprofil aufweisen.

3. Aufwickelvorrichtung nach einem der Ansprüche 1 oder 2, dadurch **gekennzeichnet**, daß die Stabelemente (45) vom Anschlußstück (16) getragen sind.

4. Aufwickelvorrichtung nach einem der Ansprüche 1 bis 3, dadurch **gekennzeichnet**, daß der Flansch (15) eine Handkurbel (44) trägt, die an diesem zwischen zwei Stellungen, nämlich einer zurückgezogenen Bereitschaftsstellung und einer ausgefahrenen Betriebsstellung beweglich angebracht ist.

5. Aufwickelvorrichtung nach Anspruch 4, dadurch **gekennzeichnet**, daß die Handkurbel (44) in der zurückgezogenen Bereitschaftsstellung den Zugang zum Anschlußorgan (18) abdeckt und in der Betriebsstellung diesen Zugang freigibt.

6. Aufwickelvorrichtung nach den Ansprüchen 1 und 5, dadurch **gekennzeichnet**, daß die Handkurbel (44) eine Haube bildet, die bei einem über zwei einander gegenüberliegende Seitenwände (51) gegebenen Eingriff mit den eine Gleitführung bildenden Stabelementen (45) das Anschlußorgan (18) überdeckt und daß deren Vorderwand (50) durchbrochen ist.

7. Aufwickelvorrichtung nach einem der Ansprüche 1 bis 6, dadurch **gekennzeichnet**, daß das Anschlußstück (16) ein Teil bildet, das getrennt vom Flansch (15) ausgebildet und auf diesem abgestützt ist.

8. Aufwickelvorrichtung nach einem der Ansprüche 1 bis 6, dadurch **gekennzeichnet**, daß das Anschlußstück (16) einstückig mit dem Flansch (15) ausgebildet ist.

9. Aufwickelvorrichtung nach einem der Ansprüche 1 bis 8, dadurch **gekennzeichnet**, daß der Körper (13), in Bereitschaft, Befestigungsmittel (59) aufweist, an denen auf Wunsch ein Handgriff (60) befestigbar ist, und daß diese Befestigungsmittel (59) in zueinander diametral entgegengesetzter Anordnung zwei Paare von Steg- oder Stabelementen (62) umfassen, die sich quer über den Rand des Körpers (13) erstrecken und jeweils so ausgelegt sind, daß dort das Ende eines einen Handgriff (60) bildenden Riemens einpaßbar ist.

10. Aufwickelvorrichtung nach Anspruch 9, dadurch **gekennzeichnet**, daß jedes der Stabelemente (62) in Längsrichtung eine Aussparung (63) aufweist, die über einen Schlitz (64) seitlich in Richtung des Stabelements (62) desselben Paares nach außen mündet und die an einem ihrer Enden durch eine Querwand (65) abgeschlossen ist.

11. Aufwickelvorrichtung nach einem der Ansprüche 9, 10, dadurch **gekennzeichnet**, daß die beiden Stabelemente (62) ein und desselben Paares beiderseits der Öffnung (14) angeordnet sind, die im Körper (13) für den Durchtritt des Kabels (10) vorgesehen ist.

12. Aufwickelvorrichtung nach Anspruch 10, dadurch **gekennzeichnet**, daß der einen Handgriff (60) bildende Riemen für einen Eingriff mit den Stabelementen (62) an jedem seiner Enden eine Klaue (68) aufweist, die seitlich auf jeder ihrer Seiten mit einer Wulst (69) versehen ist.

13. Aufwickelvorrichtung nach den Ansprüchen 11 und 12, dadurch **gekennzeichnet**, daß die Klaue (68) des einen Handgriff (60) bildenden Riemens, die sich auf der Seite der Öffnung (14) des Körpers (13) befindet, einen Schlitz (70) aufweist.

## Claims

1. A reel, in particular for an electrical cable, of the kind comprising a body (13) which forms a housing for the cable (10) in question and which is laterally provided with an opening (14) for the cable to issue therefrom, a side plate portion (15) which, being mounted rotatably on the body (13) to close the housing which said body forms, constitutes a winding drum for the cable (10), and a connecting collar (16) which is fixed with respect to the side plate portion (15) and which bears at least one connecting member (18) for establishing a connection with the cable (10), characterised in that the side plate portion (15) is provided in a condition of readiness with fixing means (43) which are capable of permitting an actuating crank (44) to be fitted thereto as required and which are formed by two bar portions (45) which, being of elongate configuration in mutually parallel relationship, each extend on respective sides of the connecting member (18) and jointly form a sliding guide.

2. A reel according to claim 1 characterised in that said bar portions (45) are each transversely of a right-angled profile.

3. A reel according to either one of claims 1 and 2 characterised in that said bar portions (45) are carried by the connecting collar (16).

4. A reel according to any one of claims 1 to 3 characterised in that, the side plate portion (15) bearing an actuating crank (44), the latter is mounted thereon movably between two positions, namely a retracted readiness position and an extended operative position.

5. A reel according to claim 4 characterised in that, in the retracted readiness position, the actuating crank (44) closes off access to the connecting member (18) and in the operative position it opens said access.

6. A reel according to claims 1 and 5 in combination characterised in that the actuating crank (44) forms a cap which, when engaged by means of two oppositely disposed side walls (51) with, when bar portions (45) forming the sliding guide, fits over the connecting member (18), the front wall (50) of the cap being apertured.

7. A reel according to any one of claims 1 to 6 characterised in that the connecting collar (16) forms a component which, being separate from the side plate portion (15), is fitted thereto.

8. A reel according to any one of claims 1 to 6 characterised in that the connecting collar (16) is in one piece with the side plate portion (15).

9. A reel according to any one of claims 1 to 8 characterised in that the body (13) is provided in the readiness condition with fixing means (59) which are capable of permitting a gripping handle (60) to be fitted thereto as required, said fixing means (59) comprising, disposed diametrally at opposite positions relative to each other, two pairs of bar portions ( 62 ) which intend transversely on the edge of said body (13) and which are each adapted to permit the end of a strap forming the gripping handle (60) to be fitted thereto.

10. A reel according to claim 9 characterised in that each of said bar portions (62) is provided longitudinally with a recess (63) which by way of a slot (64) opens laterally to the interior in the direction of the bar portion (62) of the same pair and which is closed at one of its ends by a transverse wall (65).

11. A reel according to either one of claims 9 and 10 characterised in that the two bar portions (62) of the same pair are each disposed on respective sides of the opening (14) in the body (13) for the cable (10) to pass therethrough.

12. A reel according to claim 10 characterised in that, to be in engagement with said bar portions (62), the strap forming the gripping handle (60) is provided at each of its ends with a fixing member (68) which is laterally provided with a bead (69) on each of its sides.

13. A reel according to claims 11 and 12 in combination characterised in that the fixing member (68) of the strap forming the gripping handle (60) which is at the side of the opening (14) in the body (13) has a slot (70).

FIG. 1

FIG. 2

FIG.3

FIG.5

FIG.6

FIG.4

FIG.7

FIG.10

FIG.8

FIG.11

FIG.12

FIG.9

FIG.13